# EUROPEAN PATENT APPLICATION

(11) **EP 4 266 193 A1**
(43) Date of publication of application: **25.10.2023**
(21) Application number: 23168347.5
(22) Date of filing: 17.04.2023
(51) Int. Cl.: G06F 16/332, G06F 16/9032

(54) **AUTONOMOUS CONVERSATIONAL INTELLIGENCE**

(30) Priority: 19.04.2022 GB 202205681
(71) Applicant: Enterprise Bot Private Limited, London E9 5EN (GB)
(72) Inventor: JAIN, Pranay Lalitkumar, 8008 Zurich (CH); JAYASANKAR, Sandeep Kumar, 35 Bangalore (IN)
(74) Representative: Dentons UK and Middle East LLP

(57) **Abstract**

Herein provides a system, apparatus and method(s) for facilitating autonomous interaction between two or more devices for facilitating autonomous interaction between devices based on a language model trained on dynamic data. In particular, the method comprises receiving an input query at a first device and converting the input query to a first vector using the language model. The metadata is extracted from the input query to generate a second vector. A text corpus is selected based on the input query, where the corpus comprises a collection of precompiled text segment vectors associated with the input query. One or more text segment vectors are selected from the corpus based on the first and second vectors. A list of text segments based on said one or more selected text segment vectors is outputted to a second device, where the output comprises at least one answer to said input query.

## Description

The present application relates to a system, apparatus and method(s) of facilitating autonomous interaction between two or more devices.

### Background

Chatbots are prevalent across many industries and are deployable in lieu of providing text, audio, and/or visual contact with a live human agent to facilitate conversation on a network level. In particular, the chatbots may run automated tasks over the network while simulating human conversation prior to or in place of the human agent.

It is understood that chatbots may utilize natural language processing methods or identify keywords from user input and then pull a reply with the matching relevant keywords or the most similar wording pattern from a database. However, these methods may be computationally intensive and often unreliable, producing inaccurate and gibberish results. Most chatbots available on the market are limited to simple conversations and tend to accommodate or be based on rudimentary tasks.

It is with respect to the above and other general considerations that aspects disclosed herein have been made to develop a system, apparatus and method(s) of facilitating autonomous conversation, for example, via a chatbot or chatbot-like software application that can address at least the shortcomings presented across existing solutions for automating conversation between two or more devices.

The embodiments and aspects described below are thus not limited to implementations that solve any or all of the disadvantages of the known approaches described above. Although relatively specific problems may be discussed, it should be understood that the aspects should not be limited to solving the specific problems identified in the background or elsewhere in this disclosure.

### Summary

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

The present disclosure provides a system, apparatus and method(s) for facilitating autonomous interaction between two or more computing devices, where such interaction is facilitated by using a language model trained on dynamic data. The language model may be implemented together with one or more machine learning methods or techniques for processing text, audio, and/or visual information, mimicking the cognitive process of a human agent. The results of which will, in turn, be queried by a user using a device or by another information automated or semi-automated system/device, thus improving the overall interaction process between the devices according to the following aspects of the disclosure.

In a first aspect, the present disclosure provides a computer-implemented method for facilitating autonomous interaction between devices based on a language model trained on dynamic data, the method comprising: receiving an input query at a first device; converting the input query to a first vector using the language model; extracting metadata from input query; generating a second vector from the extracted metadata; selecting a corpus based on the input query, wherein the corpus comprises a collection of precompiled text segment vectors associated with the input query; selecting one or more text segment vectors from the corpus based on the first vector and the second vector; and outputting a list of text segments based on said one or more text segment vectors to a second device, wherein the list of text segments comprise at least one answer to said input query.

In a second aspect, the present disclosure provides a computer-implemented method for providing a language model using dynamic data according to any one or more aspects and/or options described herein, the method comprising: collecting the dynamic data from one or more sources; parsing said dynamic data; identifying information-rich portions in the parsed dynamic data; segmenting the parsed dynamic data based on the identification; extracting metadata from parsed dynamic data based on the segmentation; providing the extracted metadata in vector representation to one or more machine learning models for training in relation to the parsed dynamic data, wherein said one or more machine learning model comprises a base language model configured to convert text input to vectors output; and outputting said one or more machine learning models trained based on the parsed dynamic data, wherein said one or more machine learning models comprise a plurality of layers such that each layer can be independently fine-tuned using the dynamic data.

In a third aspect, the present disclosure provides a computer-implemented method for preparing a corpus of precompiled text segment vectors for selection according to any one or more aspects and/or options described herein, the method comprising, collecting the dynamic data from a source; parsing said dynamic data; extracting metadata from parsed dynamic data; segmenting the parsed dynamic data; generating one or more vectors based on the segmentation; storing said one or more vectors in a queryable module in relation to metadata extracted from the parsed dynamic data; and outputting the queryable module as part of the corpus for the selection.

In a fourth aspect, the present disclosure provides a system for facilitating autonomous interaction or communication, the system comprising: one or more modules configured to: receive an input query; convert the input query to a first vector using the language model trained according to any one or more aspects and/or options described herein; extract metadata from the input query; generate a second vector from the extracted metadata; select, based on the input query, a prepared corpus as described herein, wherein the corpus comprises a collection of precompiled text segment vectors associated with the input query; select one or more text segment vectors from the corpus based on the first and second vectors; and output a list of text segments based on said one or more text segment vectors to a second device, wherein the list of text segments comprise at least one answer to said input query.

The methods described herein may be performed by software in machine-readable form on a tangible storage medium e.g. in the form of a computer program comprising computer program code means adapted to perform all the steps of any of the methods described herein when the program is run on a computer and where the computer program may be embodied on a computer-readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The optional features or options described herein may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is a flow diagram illustrating an example process for facilitating autonomous interaction between devices according to the invention;
Figure 2 is a schematic diagram illustrating an example system for facilitating autonomous interaction or communication according to the invention;
Figure 3 is a schematic diagram illustrating an example layers of the language model using in facilitating autonomous interaction between devices according to the invention; and
Figure 4 is a block diagram of a computer or computing device suitable for implementing embodiments of the invention; and
Figure 5 is a pictorial diagram illustrating an example output response according to the embodiments of the invention.

Common reference numerals are used throughout the figures to indicate similar features.

### Detailed Description

Embodiments of the present invention are described below by way of example only. These examples represent the suitable modes of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

The present disclosure provides smart software implementation, for example, an agile chatbot implementation configured to facilitate interactions between human user(s) and one or more enterprise platforms. The software implementation is at least in part of or related to the herein described system, apparatus and method(s) for such facilitated interactions between two or more computing devices. The implementation is adapted to using one or more customized language models trained on dynamic data sources. The implementation is suitable for various uses or applications.

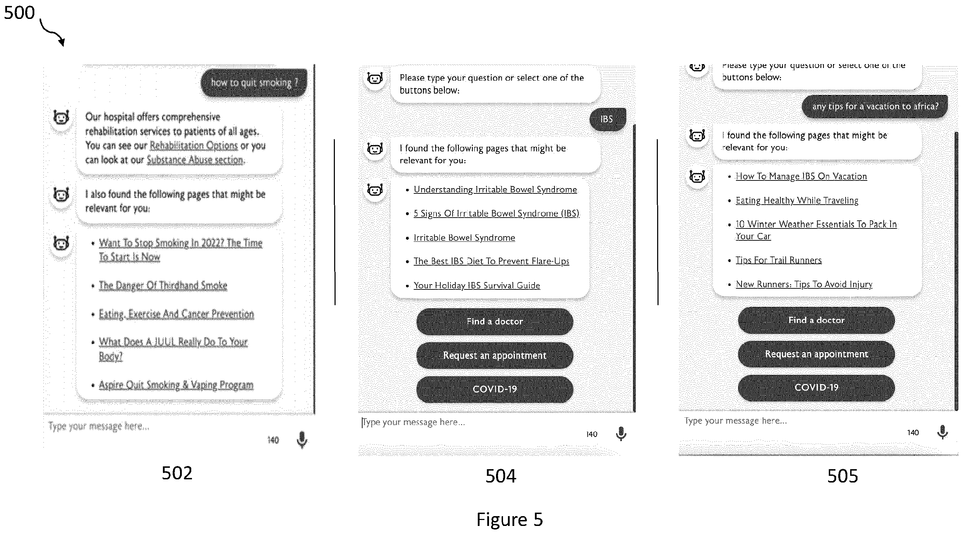

Applications of the present system, apparatus and method(s) are applicable for implementation under different enterprise environments, which include but are not limited to, for example, as an integral part of an autonomous chatbot/conversational assistant for customer support, an autonomous process creation based on document mining, personal/executive virtual assistants to complete tasks based on public documentation, an autonomous chatbot/conversational assistant for employee internal data, and serving as a product information bot in an enterprise environment. Exemplary applications where complex tasks are involved are shown according to Figure 5.

The exemplary implementations above offer unique opportunities for applying the system, apparatus and method(s) to facilitate autonomous interaction between the users and devices. Said devices may be configured to receive an input query from each user. The input query may be converted to a first vector using a language model according to the implementation. Metadata may be extracted therefrom to provide a second vector. Both first and second vectors are used to select further vectors, which serve as output answers in response to the input query from the users.

Implementation(s) of the system, apparatus and method(s) and various aspects of the implementation(s) provided herein delivers an unparalleled advantage over the prior and existing solutions, by way of which the system, apparatus and method(s) of the implementation(s) may be configured to produce artificial responses mimicking the response of a human agent to the extent significantly improving the response accuracy. The human user would no longer be required to perform some of the more tedious steps in order to obtain the desired response in lieu of their query. Accordingly, the response provided by the present implementation would no longer be limited to simple conversations and accommodates for complex tasks normally required in enterprise environments.

The advantages of the present implementation are illustrated according to the benchmarked results in Table 1. The accuracy result of the present implementation is compared in the table with accuracy results from competitive open-source and proprietary algorithms that are used with some of the existing chatbot systems. The benchmark is performed based on conventional accuracy scripts created from ground truth, i.e. real user queries on exemplary knowledge base, where the results of which are normalized and shown as scores in the table.

**Table 1**

| Benchmark | Accuracy Scores |
|---|---|
| Coevo | 9.63 |
| OpenAI | 39.75 |
| Elastic | 27.21 |
| DocBrain (version dated Dec 17th 2021) | 44.51 |
| DocBrain (version dated March 10th 2022) | 67.46 |

In achieving the above accuracy results, the present implementation (via DocBrain) is configured and consequently purposed to utilize data from one or more sources in accordance with other aspects of the system, apparatus and method(s) described herein as the means to improve the accuracy of the resultant response when provided with different user queries.

A data source may pertain to the enterprise task involved in the application of the present implementation. An example of the data source may be a website, a series of web pages, or the backend database connecting to the website. The data may be obtained by crawling or scarping the website or webpages using appropriate robots. The data may be provided directly from uploaded documentation by the user or an automated system. The data may also be extracted using an application programming interface to connect to the database directly or indirectly through means of a data template. The extracted metadata is related to content-specific data from one or more data sources, in the form of hyper-media, which includes but are not limited to, for example, object detection in images, videos, transcript of videos & audio samples, inked data from hyperlinks, fields present in forms. The content-specific data may be provided from said one or more data sources.

The data from one or more sources may be converted into vectors or vectorized for further processing. Different data types may be combined and aggregated during this vectorization process. For example, audio and other media (media content derived from email, voice, and/or video use cases) may be directly translated to vectors using one or more vectorization techniques, i.e. voice2vec for audio. Text transcription associated with such data may also be used indirectly to generate vectors, as the same with image captions that are to be converted to vectors using optical character recognition techniques.

In another example, the data may be received from one or more virtual reality (VR) and/or augmented reality (AR) sources, such as from a device or system for receiving the digital data from a VR/AR source. The device or system may be connected, or as part of a medium, i.e. VR/AR headset, such that the digital data of said one or more VR and/or AR sources may be converted and/or pre-processed by the present invention into any of the suitable vector formats, serving as input to training said one or more machine learning models described herein.

It is understood that the data from each source may be continuously updated to the extent that, at various time points, the data may differ and may be differentiated when the data is extracted from more than one data source. The data extracted, including the metadata, may be dynamic in nature, which refers to data that could change asynchronously over time as new information becomes available.

The language model herein refers to a statistical or empirical model employing statistical and probabilistic techniques to determine the probability of a given sequence of words occurring in a text portion, for example, a sentence. Language models may help analyze textual data to provide a basis for their word predictions. Examples of language model used by the present system, apparatus and method(s) may include but are not limited to, for example, linguistic or text-specific transforms such as universal sentence encoder, all-mpnet-base-v2, paraphrase-multilingual-mpnet-base-v2, cross-en-de-roberta-sentence-transformer, svalabs/bi-electra-ms-marco-german-uncased, sentence-transformers/stsb-xlm-r-multilingual, paraphrase, multilingual-MiniLM-L12-v2, distiluse-base-multilingual-cased-v1, Language-agnostic BERT Sentence Embedding (LaBSE), and other text encoding algorithms. The above one or more linguistic or text-specific transforms or algorithms may additionally serve as the base model on which the final language model may be based.

For example, the language model may be provided and trained using the herein described dynamic data. The dynamic data may be pre-processed such that the raw data may be collected from one or more sources and subsequently parsed during pre-processing. Information-rich portions in the parsed dynamic data are identified and segmented accordingly. The dynamic data may be categorical with respect to language, domain, and corpus. The categories of the dynamic data thus comprise data specific to language, domain, and corpus.

Further, metadata may be extracted from the parsed dynamic data based on the segmentation results. The extracted metadata is stored in vector representation and used for training one or more machine learning (ML) models. The ML model(s) comprises at least one base model in accordance with the algorithms described herein, where the base model is configured to convert text input to vectors output during the initial iteration in the absence of parsed dynamic data. In the presence of parsed dynamic data, the ML model(s) may be trained in relation to the model layers such that each layer can be independently fine-tuned using said dynamic data.

The trained language model may be responsible for identifying text portions from a text corpus or used with respect to the system, apparatus and method(s). Text corpus or corpus herein refers to a collection of text in at least one language. The collection of text may comprise a large and structured set of texts stored electronically in a relational database or part of a data set stored in a data storage format. The corpus may be pre-processed. During pre-processing, the precompiled text segment vectors are prepared by parsing raw text data collected from one or more sources. The precompiled text segment vectors and the associated metadata may be segmented and stored in a queryable database(s) for use with the language model thereafter.

In preparing the text corpus, for example, dynamic data from a source may be collected and parsed. The metadata may be extracted and stored in a database. The data may be further segmented before or when retrieving from the storage. One or more vectors may be generated from the stored data and corresponding metadata such that the text corpus comprises these vectors. The vector(s) may be outputted as part of the corpus for the selection of candidate response an input query from the user according to the system, apparatus and method(s). The data and corresponding metadata stored in vector representation may be used to train one or more ML models.

It is understood that herein described ML model(s) comprises one or more ML methods or techniques. Examples of these ML model/technique(s), structure(s) or algorithm(s) may include or be based on, by way of example only but is not limited to, one or more of: an ML technique or algorithm/method that can be used to generate a trained model based on a labelled and/or unlabelled training datasets; one or more supervised ML techniques; semi-supervised ML techniques; unsupervised ML techniques; linear and/or non-linear ML techniques; ML techniques associated with classification; ML techniques associated with regression and the like and/or combinations thereof.

Some specific examples of ML techniques/model structures may include or be based on, by way of example only but are not limited to, one or more of active learning, multitask learning, transfer learning, neural message parsing, one-shot learning, dimensionality reduction, decision tree learning, association rule learning, similarity learning, data mining algorithms/methods, artificial neural networks (NNs), autoencoder/decoder structures, deep NNs, deep learning, deep learning ANNs, inductive logic programming, support vector machines (SVMs), sparse dictionary learning, clustering, Bayesian networks, types of reinforcement learning, representation learning, similarity and metric learning, sparse dictionary learning, genetic algorithms, rule-based machine learning, learning classifier systems, and/or one or more combinations thereof and the like.

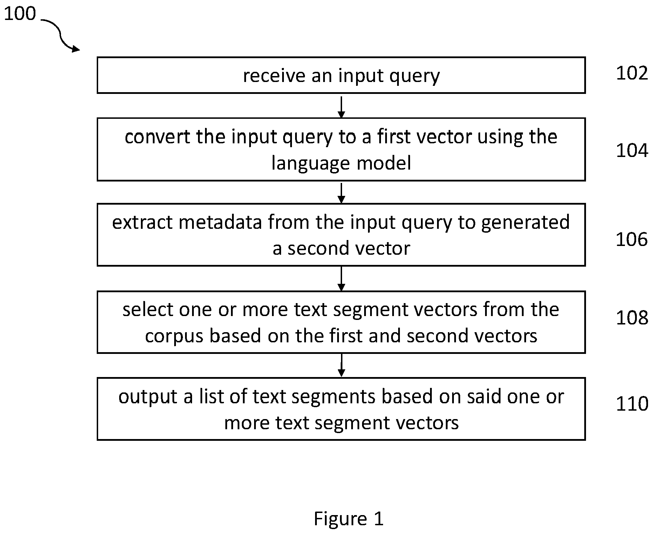

Figure 1 is a flow diagram illustrating an example process 100 for facilitating autonomous interaction between devices utilizing one or more sources of dynamic data. The process 100 is prescribed to receive an input query on one device. At said device, the input query is converted to a first vector using the language model trained on dynamic data. The training data may be pre-processed. A second vector is generated from the input query. The second vector comprises metadata associated with the data. Both the first and second vectors are used to select suitable candidates for responding to the input query. The following steps further elaborate on the process 100.

In step 102, the first device receives an input query from the user. The first device may comprise various complements for processing the data and converting the input query into an acceptable format. The input query may be associated with and differentiated based on different categories of the dynamic data. These categories may be specific to language, domain, corpus, and the like, where the input query may be correlated with one or more categories when the data associated with these categories are used to fine-tune the ML model(s) in the subsequent steps.

In step 104, the input query may be converted to a first vector using the language model described herein. The language model may comprise one or more layers segmented based on categories of the dynamic data. The segmentation may be based on additional language-specific data from a predetermined set of documents, additional domain-specific data from insurance, travel, health care sectors and the like, and further extracted data corresponding to one or more steps in the process 100 such that the language model may be iteratively trained. It can be understood that the layers of the language model can be differentiated and separately trained with respect to the categories determined by the user.

In step 106, metadata may be extracted from the input query. The extracted metadata comprises at least one type of entity metadata associated with the input query taking the context of the input query into consideration, where the entity may be derivable from such context. The metadata is converted to one or more vectors or vectorized to be processed. The vectorized metadata may be stored in relation to the input query.

In step 108, at least one text corpus may be selected based on the input query. Each text corpus may comprise a collection of precompiled text segment vectors associated with the input query. Based on the first and second vectors, one or more precompiled text segment vectors are selected from said one or more text corpora. As an option, the collection of precompiled text segment vectors may comprise at least two or more entities and relationships therebetween. The entities may be associated with the extracted metadata therefrom.

In the selection process, the second vector may be compared with at least a subset of the collection of precompiled text from the corpus. Certain text segment vectors are identified from the subset based on the comparison. These text segment vectors are filtered based on the first and second vectors in order to select said one or more text segment vectors for outputting.

The comparison of the second vector and the collection of precompiled text may be determined using a matcher algorithm based on a similarity between the second vector and each of said one or more text segment vectors from the subset. The matcher algorithm may employ methods such as an ensemble of multiple approximate nearest neighbours to determine the degree of similarity. As an option, the section of said one or more text segment vectors may be an iterative process using heuristic-based polling until one or more criteria of the iteration has been met. These criteria may be predetermined or determined ad hoc based on user input.

In step 110, one or more lists of text segments may be outputted based on said one or more text segment vectors to a second device or further devices. The second device may comprise a user interface to which the user may interact with the first device to which the input query proceeds. The first device from the second device may receive the input query to the extent that the list of text segments comprises at least one answer to the input query. Optionally, at least one of the first or the second devices may comprise or part of an automated or semi-automated information system, where the automated or semi-automated information system is adapted to communicate with a user or another system.

In one example, the input query is a text string. The content of the text string is "can i board with a wheelchair". The system accepts the input query. The metadata is extracted and stored by the system. The metadata content from the extracted text string includes at least a list containing ['board', 'wheel chair']. The input query is vectorized and depicted in numerical values shown below.

```
[[ 0.03688601 0.00111213 -0.01440226 ... -0.03231998 -0.04942935
      -0.02142461]
     [-0.0056235 0.0115761 -0.01057612 ... 0.01054189 -0.04336235
      -0.02935481]
     [ 0.01274928 0.04226463 -0.01640297 ... 0.01514077 -0.04173178
      -0.00448163]
     -0.00259803 -0.07121269 0.02995244 ... -0.01211557 -0.01620471
       0.02897156]
     [ 0.02279368 0.01348549 -0.02129576 ... -0.0931212 -0.01765182
      -6.04650355]
     [-0.05405359 0.01209773 -0.05959998 ... -0.03066441 -0.05912078
      -0.02054783]]
```

Based on the vectorized input query, Docbrain (corpus) is used to obtain a collection of precompiled text segment vectors associated with the input query. An exemplary collection of precompiled text segment vectors of the input query and the corresponding metadata associated with at least two or more entities and relationships between the entities of each of the precompiled text segment vectors. The collection of precompiled text segment vectors in the form of coherent text English sentences is shown as follows.

```
['What if I require passenger assistance or a wheelchair space reservation?',
  'What wheelchair access is available on Azuma?',
  'How do I make a booking for a wheelchair user?',
  'How To Make A Booking For A Wheelchair User',
  'Can you use your disabled bus pass on trains?',
  'Are there companion seats with all the wheelchair spaces onboard?',
  'Are mobility scooters allowed on trains?',
  'Can I Bring A Cycle Trailer On The Train',
  'Are there wheelchair spaces in First Class?',
  'Can I Book Assisted Travel For My Pram',
  What happens if my train has no Standard wheelchair spaces?',
  'Wheelchair Users And The Automatic Ticket Gates',
  'Wheelchair or Mobility Scooter Too Big']
```

The exemplary output may include a header text such as "I found the following pages that might be relevant to you", followed by a second selection of the precompiled text segment vectors. The second selection may include the most relevant text segment vectors or a combination thereof. The selection may depend on the similarity of the text segment vector to the input query vector in relation to the metadata by way of similar comparison, i.e. taking cosine similarity between two or more vectors. The most relevant text segments vectors or the combination may comprise highlights or underlining of the most similar/relevant text segments. For example, "What if I require passenger assistance or a wheel chair space reservation?" may be presented in layout according to output responses of the system applications shown in Figure 5. It can be understood that the accuracy of the output response provided by the present system, according to the benchmarked results in Table 1, shows improvement over any existing solutions for automating conversation between two or more devices.

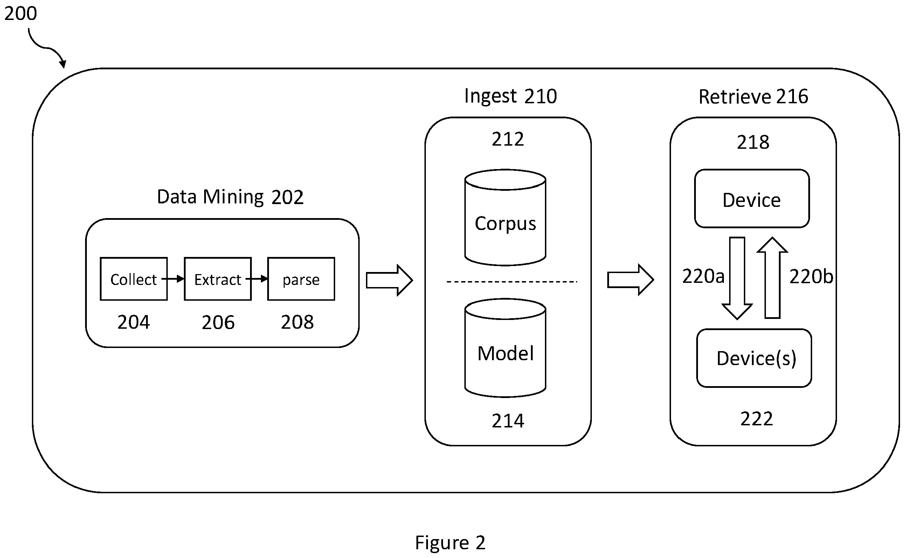

Figure 2 is a schematic diagram illustrating an example system 200 for facilitating autonomous interaction or communication between two or more devices, where system 200 may be configured to carry out one or more steps described according to Figure 1. The system 200 may be adapted to perform enterprise applications such as being used in autonomous chatbot/conversational assistant for customer support, autonomous process creation based on document mining, personal/executive virtual assistants to complete tasks based on public documentation, an autonomous chatbot/conversational assistant for employee internal data, or in a product information bot in an enterprise setting. Examples of the applications are shown according to Figure 5.

For example, system 200 may comprise one or more modules configured to facilitate autonomous communication between a first device 218 and one or more other devices 222. System 200 may be located on or as an integral part of the first device 218. The first device 218 is configured to interact with one or more other devices through at least one network, where the interactions 220a, 220b between the devices 218, 22 are being transmitted through the network.

The module(s) of system 200 may be categorically arranged with respect to the phases shown in the figure. System 200 may be configured with respect to at least one of the phases: data-mining phase 202, ingest phase 210, and retrieval phase 216. Each phase may be implemented independently or in combination with one or more aspects of another phase in order to suggest a suitable response to an input query. It is understood that the sequential order of these phases are determinative and is only illustrative with respect to system 200.

In the data-mining phase 202, the dynamic data may be pre-processed after being collected from one or more data sources. During training, the metadata may be extracted from the dynamic data to construct a training data set with respect to the data. The data and the associated metadata may be parsed, filtering out any irregularity in the data. The pre-processing output may be a training vector adapted to serve as input for the said one or more ML models, language models, or used in the construction of the text corpus. During inference, system 200 may receive an input query formatted similarly to the training vector. System 200 may also extract the metadata from each input query to generate a second vector. Both vectors will be applied to select the appropriate vectors during the ingest phase 206.

In the ingest phase 206, a precompiled text corpus 212 and train language model 214 is provided by using the training vector derived from raw data in the data-mining phase 202. Corpus 212 may comprise a collection of text segment vectors that are precompiled. The language model may comprise one or more ML models described herein. The language model 214 is configured to receive and convert the input query to a first vector based on the training data set. Metadata associated with the data may also provide in the form of a second vector. Both the first and second vectors are applied for selecting text segment vector(s) from the corpus 202 serving as system output.

In the retrieval phase 216, the first device 218 may be configured to interact with one or more other devices 222. The text segment vector(s) generated in the ingest phase 206 is used as output interactions 220a to said one or more other devices 222 based on the input interactions 220b received by the first device 218. The other device(s) 222 may comprise a user interface for receiving an input query. The input query would be delivered across a network to be received instantly by the first device 218. The input query is converted to a first vector using a trained language model 214. The metadata may be extracted from the input query forming the second vector. For example, the input query may be in the context of a user question or concern. The corresponding metadata may be to what context or when the input query was received or sent and in the perspective of the enterprise environment.

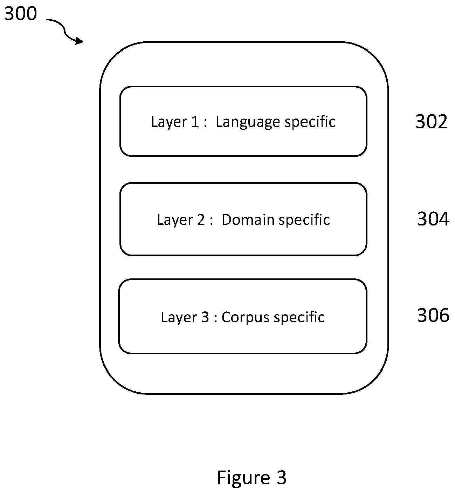

Figure 3 is a schematic diagram illustrating exemplary layers of the language model 300 being used as part of the system according to Figure 2 or in relation to the steps of Figure 1. The language model may comprise one or more ML models trained using dynamic data pre-processed according to one or more steps described herein.

For example, the language model may be provided by collecting the dynamic data from one or more sources; parsing said dynamic data; identifying information-rich portions in the parsed dynamic data; segmenting the parsed dynamic data based on the identification; extracting metadata from parsed dynamic data based on the segmentation; providing the extracted metadata in vector representation to one or more machine learning models for training in relation to the parsed dynamic data, where said one or more machine learning model comprises a base language model configured to convert text input to vectors output; and outputting said one or more machine learning models trained based on the parsed dynamic data, wherein said one or more machine learning models comprise a plurality of layers such that each layer can be independently fine-tuned using the dynamic data.

As shown in the figure, the plurality of layers comprises a language layer, a domain layer, and a corpus layer. Each layer may be derived using said one or more sources comprising at least one text source and media source. The language model may also comprise one or more layers that are categorically configured to be fine-tuned using the dynamic data based on a separation of the layers, where the dynamic data comprises parse-able text for processing by the language model.

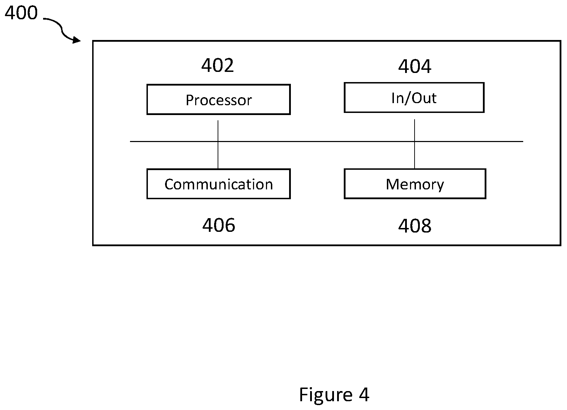

Figure 4 is a block diagram illustrating an example computing apparatus/ system 400 that may be used to implement one or more aspects of the present invention and any modifications thereof, and/or as described herein with reference to figures 1 to 3. The computing apparatus/system 400 includes one or more processor unit(s) 402, an input/output unit 404, communications unit/interface 406, a memory unit 408 in which the one or more processor unit(s) 402 are connected to the input/output unit 404, communications unit/interface 406, and the memory unit 408. In some embodiments, the computing apparatus/system 400 may be a server, or one or more servers networked together. In some embodiments, the computing apparatus/system 400 may be a computer or supercomputer/processing facility or hardware/software suitable for processing or performing the one or more aspects of the system(s), apparatus, method(s), and/or process(es) combinations thereof, modifications thereof, and/or as described with reference to any of the figures. The communications interface 406 may connect the computing apparatus/system 400, via a communication network, with one or more services, devices, the server system(s), cloud-based platforms, systems for implementing subject-matter databases and/or knowledge graphs for implementing the invention as described herein. The memory unit 408 may store one or more program instructions, code or components such as, by way of example only but not limited to, an operating system and/or code/component(s) associated with the process(es)/method(s) as described with reference to figures 1 to 3, additional data, applications, application firmware/software and/or further program instructions, code and/or components associated with implementing the functionality and/or one or more function(s) or functionality associated with one or more of the method(s) and/or process(es) of the device, service and/or server(s) hosting the process(es)/method(s)/system(s), apparatus, mechanisms and/or system(s)/platforms/architectures for implementing the present invention as described herein.

Figure 5 is a pictorial diagram illustrating exemplary outputs 500 response according to the implementation of the system, process, method(s) described herein. Different interactions relating to different tasks in the health care context are shown in the figure. In the first interstation 502, for example, a user may request information about how to quit smoking. The first interaction 502 provides a response with an appropriate answer to this question. The response may further include information derived from the corpus using the language model. In the second interaction 504, the exemplary system provides a question for the user to respond to based on an input query. The user responded with an answer. Further information is provided similar to the first interaction 502. In the third interaction 506, the user responded with a question instead of an answer, where further responses were required from the system.

It is understood that the interactions shown in the figure are illustrative only and does not limit the tasks or actions that the present implementation may undertake through the course of interacting with the user. Various embodiments, examples, and aspects of the present implementation are described herein to administer interactions relating to different tasks under specified enterprise environments.

The above description discusses the implementation of the invention according to the following aspects and options are understood by the skilled person to be combinable with respect to any other aspect(s), example(s), or option(s) described herein.

In one aspect is a computer-implemented method for facilitating autonomous interaction between devices based on a language model trained on dynamic data, the method comprising: receiving an input query at a first device; converting the input query to a first vector using the language model; extracting metadata from input query; generating a second vector from the extracted metadata; selecting a corpus based on the input query, wherein the corpus comprises a collection of precompiled text segment vectors associated with the input query; selecting one or more text segment vectors from the corpus based on the first vector and the second vector; and outputting a list of text segments based on said one or more text segment vectors to a second device, wherein the list of text segments comprise at least one answer to said input query.

In another aspect is a computer-implemented method for providing a language model using dynamic data according to any one or more aspects and/or options described herein, the method comprising: collecting the dynamic data from one or more sources; parsing said dynamic data; identifying information-rich portions in the parsed dynamic data; segmenting the parsed dynamic data based on the identification; extracting metadata from parsed dynamic data based on the segmentation; providing the extracted metadata in vector representation to one or more machine learning models for training in relation to the parsed dynamic data, wherein said one or more machine learning model comprises a base language model configured to convert text input to vectors output; and outputting said one or more machine learning models trained based on the parsed dynamic data, wherein said one or more machine learning models comprise a plurality of layers such that each layer can be independently fine-tuned using the dynamic data.

In another aspect is a computer-implemented method for preparing a corpus of precompiled text segment vectors for selection according to any one or more aspects and/or options described herein, the method comprising, collecting the dynamic data from a source; parsing said dynamic data; extracting metadata from parsed dynamic data; segmenting the parsed dynamic data; generating one or more vectors based on the segmentation; storing said one or more vectors in a queryable module in relation to metadata extracted from the parsed dynamic data; and outputting the queryable module as part of the corpus for the selection.

In another aspect is a system for facilitating autonomous interaction or communication, the system comprising: one or more modules configured to: receive an input query; convert the input query to a first vector using the language model trained according to any one or more aspects and/or options described herein; extract metadata from the input query; generate a second vector from the extracted metadata; select, based on the input query, a prepared corpus as described herein, wherein the corpus comprises a collection of precompiled text segment vectors associated with the input query; select one or more text segment vectors from the corpus based on the first and second vectors; and output a list of text segments based on said one or more text segment vectors to a second device, wherein the list of text segments comprise at least one answer to said input query.

In another aspect is a computer-readable medium comprising computer-readable code or instructions stored thereon, which when executed on a processor, causes the processor to implement the method according to any one or more aspects and/or options described herein.

In another aspect is an apparatus comprising a processor, a memory and a communication interface, the processor connected to the memory and communication interface, wherein the apparatus is adapted or configured to implement the method according to any one or more aspects and/or options described herein.

As an option, iterating the section of said one or more text segment vectors using heuristic-based polling until one or more criteria of the iteration has been met.

As an option, selecting said one or more text segmental vectors further comprising: comparing the second vector with at least a subset of the collection of precompiled text from the corpus; identifying said one or more text segment vectors from the subset based on the comparison; and filtering said one or more text segment vectors based on the second vector in order to select said one or more text segment vectors for outputting.

As an option, the comparison is provided using a matcher algorithm based on a similarity between the second vector and each of said one or more text segment vectors from the subset.

As an option, the language model comprises one or more layers segmented based on categories of the dynamic data.

As an option, the categories of the dynamic data comprise data that are specific to language, domain, and corpus.

As an option, the collection of precompiled text segment vectors comprises at least two or more entities and relationships therebetween.

As an option, the metadata comprise at least entity metadata associated with the input query.

As an option, the plurality of layers comprises a language layer, a domain layer, and a corpus layer.

As an option, said one or more sources comprise at least one text source and media source.

As an option the language model comprises one or more categorical layers configured to be fine-tuned using the dynamic data based on a separation of the layers, wherein the dynamic data comprises parse-able text for processing by the language model.

In the embodiments, examples, and aspects of the invention as described above such as process(es), method(s), system(s) may be implemented on and/or comprise one or more cloud platforms, one or more server(s) or computing system(s) or device(s). A server may comprise a single server or network of servers, the cloud platform may include a plurality of servers or network of servers. In some examples, the functionality of the server and/or cloud platform may be provided by a network of servers distributed across a geographical area, such as a worldwide distributed network of servers, and a user may be connected to an appropriate one of the network of servers based upon a user location and the like. In the embodiments, examples, and aspects of the invention as described above such as process(es), method(s), system(s) may be implemented on and/or comprise one or more cloud platforms, one or more server(s) or computing system(s) or device(s). A server may comprise a single server or network of servers, the cloud platform may include a plurality of servers or network of servers. In some examples the functionality of the server and/or cloud platform may be provided by a network of servers distributed across a geographical area, such as a worldwide distributed network of servers, and a user may be connected to an appropriate one of the network of servers based upon a user location and the like.

The above description discusses embodiments of the invention with reference to a single user for clarity. It will be understood that in practice the system may be shared by a plurality of users, and possibly by a very large number of users simultaneously.

The embodiments described above may be configured to be semi-automatic and/or are configured to be fully automatic. In some examples a user or operator of the querying system(s)/process(es)/method(s) may manually instruct some steps of the process(es)/method(es) to be carried out.

The described embodiments of the invention a system, process(es), method(s) and/or apparatus for querying a database or graph data structure and the like according to the invention and/or as herein described may be implemented as any form of a computing and/or electronic device. Such a device may comprise one or more processors, which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the process/method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium or non-transitory computer-readable medium. Computer-readable media may include, for example, computer-readable storage media. Computer-readable storage media may include volatile or non-volatile, removable or non-removable media implemented in any method or technology for storage of information such as computer-readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and blu-ray disc (BD). Further, a propagated signal is not included within the scope of computer-readable storage media. Computer-readable media also includes communication media including any medium that facilitates transfer of a computer program from one place to another. A connection or coupling, for instance, can be a communication medium. For example, if the software is transmitted from a website, server, or other remote source using a coaxial cable, fiber optic cable, twisted pair, DSL, or wireless technologies such as infrared, radio, and microwave are included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Programmable Logic Devices (CPLDs), etc.

Although illustrated as a single system, it is to be understood that the computing device may be a distributed system. Thus, for instance, several devices may be in communication by way of a network connection and may collectively perform tasks described as being performed by the computing device.

Although illustrated as a local device it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, loT devices, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary", "example" or "embodiment" is intended to mean "serving as an illustration or example of something". Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art.

What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A computer-implemented method for facilitating autonomous interaction between devices based on a language model trained on dynamic data, the method comprising:
receiving an input query at a first device;
converting the input query to a first vector using the language model;
extracting metadata from input query;
generating a second vector from the extracted metadata;
selecting a corpus based on the input query, wherein the corpus comprises a collection of precompiled text segment vectors associated with the input query;
selecting one or more text segment vectors from the corpus based on the first vector and the second vector; and
outputting a list of text segments based on said one or more text segment vectors to a second device, wherein the list of text segments comprise at least one answer to said input query.

2. The method of any preceding claims, further comprising:
iterating the section of said one or more text segment vectors using heuristic-based polling until one or more criteria of the iteration has been met.

3. The method of claim 1 or 2, wherein selecting said one or more text segmental vectors further comprising:
comparing the second vector with at least a subset of the collection of precompiled text from the corpus;
identifying said one or more text segment vectors from the subset based on the comparison; and
filtering said one or more text segment vectors based on the second vector in order to select said one or more text segment vectors for outputting.

4. The method of claim 3, wherein the comparison is provided using a matcher algorithm based on a similarity between the second vector and each of said one or more text segment vectors from the subset.

5. The method of any preceding claims, wherein the language model comprises one or more layers segmented based on categories of the dynamic data.

6. The method of claim 5, wherein the categories of the dynamic data comprise data that are specific to language, domain, and corpus.

7. The method of any preceding claims, wherein the collection of precompiled text segment vectors comprises at least two or more entities and relationships therebetween.

8. The method of any preceding claims, wherein the metadata comprise at least entity metadata associated with the input query.

9. A computer-implemented method for providing a language model using dynamic data according to any of the claims 1 to 8, the method comprising:
collecting the dynamic data from one or more sources;
parsing said dynamic data;
identifying information-rich portions in the parsed dynamic data;
segmenting the parsed dynamic data based on the identification;
extracting metadata from parsed dynamic data based on the segmentation;
providing the extracted metadata in vector representation to one or more machine learning models for training in relation to the parsed dynamic data, wherein said one or more machine learning model comprises a base language model configured to convert text input to vectors output; and
outputting said one or more machine learning models trained based on the parsed dynamic data, wherein said one or more machine learning models comprise a plurality of layers such that each layer can be independently fine-tuned using the dynamic data.

10. The method of claim 9, wherein the plurality of layers comprises a language layer, a domain layer, and a corpus layer.

11. The method of claim 9 or 10, wherein said one or more sources comprise at least one text source and media source.

12. A language model trained according to any of the claims 9 to 11, wherein the language model comprises one or more categorical layers configured to be fine-tuned using the dynamic data based on a separation of the layers, wherein the dynamic data comprises parse-able text for processing by the language model.

13. A computer-implemented method for preparing a corpus of precompiled text segment vectors for selection according to any of the claims 1 to 12, the method comprising,
collecting the dynamic data from a source;
parsing said dynamic data;
extracting metadata from parsed dynamic data;
segmenting the parsed dynamic data;
generating one or more vectors based on the segmentation;
storing said one or more vectors in a queryable module in relation to metadata extracted from the parsed dynamic data; and
outputting the queryable module as part of the corpus for the selection.

14. A system for facilitating autonomous interaction or communication, the system comprising: one or more modules configured to:
receive an input query;
convert the input query to a first vector using the language model trained according to any of the claims 9 to 12;
extract metadata from the input query;
generate a second vector from the extracted metadata;
select, based on the input query, a corpus prepared according to claim 13, wherein the corpus comprises a collection of precompiled text segment vectors associated with the input query;
select one or more text segment vectors from the corpus based on the first and second vectors; and
output a list of text segments based on said one or more text segment vectors to a second device, wherein the list of text segments comprise at least one answer to said input query.

15. The system of claim, wherein said one or more modules are further configured to perform the method according to any of the preceding claims 2 to 8

16. A computer-readable medium comprising computer-readable code or instructions stored thereon, which when executed on a processor, causes the processor to implement the method according to any of the preceding claims 1 to 13.

17. An apparatus comprising a processor, a memory and a communication interface, the processor connected to the memory and communication interface, wherein the apparatus is adapted or configured to implement the method according to any of claims 1 to 13.
